# EUROPEAN PATENT SPECIFICATION

(11) **EP 3 066 751 B1**
(45) Date of publication and mention of the grant of the patent: **07.03.2018**
(21) Application number: 14727042.5
(22) Date of filing: 10.04.2014
(51) Int. Cl.: H02K 15/02, B23K 26/04, B23K 26/06, B23K 101/34, B23K 101/36

(54) **ADAPTIVE LASER JOINING OF STATOR AND ROTOR LAMINATIONS**
ADAPTIVE LASER VERBINDUNG VON STATOR- UND ROTORBLECHE
ASSEMBLAGE PAR LASER ADAPTATIF DE TÔLES STATOR ET ROTOR

(30) Priority: 05.11.2013 SI 201300371
(43) Date of publication of application: 14.09.2016
(73) Proprietor: NELA, RAZVOJNI CENTER ZA ELEKTROINDUSTRIJO IN ELEKTRONIKO, d.o.o., 4228 Zelezniki (SI)
(72) Inventor: VEGELJ, David, SI- Ziri (SI); MOZINA, Janez, SI- 4240 Radovljica (SI); ZAJEC, Bostjan, SI- 5274 Crni Vrh (SI)
(74) Representative: Macek, Gregor
(86) International application number: PCT/IB2014/000519
(87) International publication number: WO 2015/067998

(56) References cited:
- DE-A1-102008 041 774
- DE-A1-102010 013 914
- US-A- 6 084 223
- COSTE F ET AL: "ADAPTIVE CONTROL OF HIGH-THICKNESS LASER WELDING", WELDING INTERNATIONAL, TAYLOR & FRANCIS, ABINGDON, GB, vol. 13, no. 6, 1 January 1999 (1999-01-01), pages 465-469, XP000829680, ISSN: 0950-7116
- Vegelj David, Zajec Bostian, Gregorcic Peter, Mozina Janez: "Adaptive Pulsed-Laser Welding of Electrical Laminations", Journal of Mechanical Engineering 60(2014)2, 106-114 , 4 February 2014 (2014-02-04), XP002738958, Retrieved from the Internet: URL:http://www.sv-jme.eu/data/upload/2014/ 02/04_2013_1407_Vegelj_02.pdf [retrieved on 2015-04-23]

## Description

The present invention relates to an apparatus and a method of adaptive laser joining of stator and rotor laminations, pertaining to the technical field of laser welding techniques and is utilized for joining together individual thin electrical sheets, or laminas, into compact stator and rotor packages to be used in electric motors.

Known methods for joining together stator and rotor laminations into compact packages may be divided into various categories, depending on the particular technology employed.

Individual laminations may be integrated into compact packages by making use of the so-called interlocks clamps, as disclosed in e.g. US6223417, US6018207, and EP0082537. It is a disadvantage of interlocks that they affect the electromagnetic properties of the packages and do not perform their task when laminations of low thickness are used. Beside that, the forming of interlocks must be integrated into the blanking process as such, adding to the complexity of the tools used for producing the individual laminas.

Laminations may be bonded together by using special two-component adhesives, as set forth in WO/2013/135378 and EP1833145. The said process is complex and the packages must be heated above a predetermined temperature.

Document XP000829680 (COSTE F ET AL: "ADAPTIVE CONTROL OF HIGHTHICKNESS LASER WELDING", WELDING INTERNATIONAL, TAYLOR & FRANCIS, ABINGDON, GB, vol. 13, no. 6, 1 January 1999 (1999-01-01), pages 465-469) discloses an apparatus for adaptive laser joining, wherein a vision sensor which determines joint geometry before the interaction zone comprises a vibrating mirror which enables the laser beam to be guided, positioned and oscillated. A sensor places behind the mirror controls its position. A process similar to the use of two-component adhesives is the use of electrical sheets coated with a special enamel which bonds together the individual laminations into a compact package when subjected to an elevated temperature and pressure. The details of the said process are disclosed in WO2006049935. Although this technique is simpler than the use of two-component adhesives, its main drawback is that the packages must be pressed with a predetermined force and heated to a predetermined temperature for a certain time.

The individual laminas may be joined together by using conventional welding methods, usually by using the laser-TIG process. A disadvantage of the said process is represented by the size of the weld seams produced which degrade the electromagnetic properties of the entire package just as interlocks do. Furthermore, TIG welding is not applicable for high-alloyed electrical sheets as the elevated percentages of silicon and aluminum in the electrical sheet inhibit bonding.

Nevertheless, the use of laser in both the continuous mode and the burst mode is the best and simplest option for joining individual laminations into compact packages. Laser welding is always started at the beginning and carried on continuously to the end of the package. Welding proceeds transversally across all the laminations. The patents covering this subject are for example US20130154434, JPS5538640. The drawbacks of the said method are that the weld affects the electromagnetic properties of the package and that a substantial amount of energy is still spent on melting the entire lateral surface of the lamina.

The technical problem remaining to be adequately solved with respect to prior-art methods and patents is that all the processes used for joining together laminations into stator or rotor packages are cumbersome, like the use of adhesives or enamels; or they affect the electromagnetic properties, like laser or conventional welding or interlocking; or they are not applicable for thinner laminations, like interlocking. While conventional laser joining may be the simplest method, welding is still carried out across the entire lateral surface of the stator or rotor package. Thus an exceeding amount of energy is spent for making additional welds in locations where welding is not needed, furthermore affecting the electromagnetic properties of the stator or rotor package.

It is an object and aim of the adaptive laser joining of stator and rotor laminations according to the invention to provide an apparatus and a method which will only carry out the joining of individual laminations in the exact location where bonding is required, which is to say, where individual laminations come into contact. There will be no welding in other regions of the lateral surface and this will indirectly contribute to better electromagnetic properties of the stator or rotor package. Thus, welding is also less energy-consuming because the material is only melted in particular locations, in other words, the volume of the molten material is substantially smaller.

### Detailed Description of the Invention

The invention at hand will be described with reference to an embodiment thereof and the accompanying drawings, of which:
Figure 1 - represents a schematic diagram of the adaptive laser joining apparatus;
Figure 2 - represents the program settings;
Figure 3 - represents some of the possible modulation shapes of the continuous laser beam.

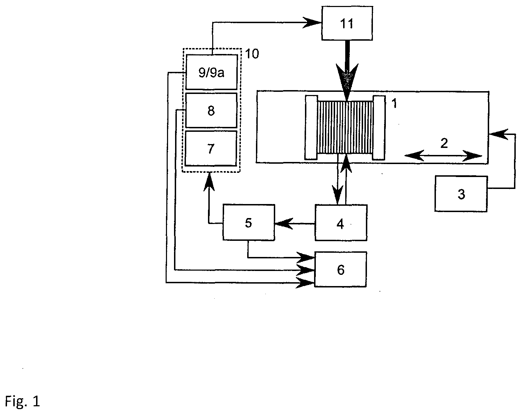

The apparatus for adaptive laser joining of stator and rotor laminations, as illustrated in Figure 1, consists of three main sections. The first section comprises a sensor 4 observing/supervising the workpiece 1, namely the stator or rotor package, and transmitting an analog/digital signal to a filter 5. The workpiece is moved by means of a movable table 2, controlled by a process computer 3. The sensor may be any type of sensor capable of touchlessly detecting the individual laminas, which is to say, the gaps separating them, for example a laser sensor, a video camera etc. The sensor must be capable of detecting the gaps between the individual laminas, which are typically of the order of magnitude of up to 50 µm. A first stage of sensor detection supervision is carried out using an oscilloscope 6 or a corresponding device, connected to the filter 5. The filter 5 ensures that noise is removed from the signal of the sensor 4. Prior to being used, the sensor 4 must be correctly adjusted. The adjustment, which is performed manually, modifies the detection range, thereby removing the greater part of the signal, while enhancing the variation of the signal in the gap region. The second section of the apparatus consists of a control unit 10, comprising a first microcontroller 7, a second microcontroller 8, and a relay 9 or a digital-to-analog converter 9a. The third section of the apparatus comprises any burst or continuous laser 11 allowing the individual bursts to be controlled or the continuous laser beam to be modulated from the outside, by means of the control unit 10.

So, for detecting the joining point, the apparatus utilizes the sensor 4 which transmits the signal through the filter 5 to the first microcontroller 7, where the signal is processed and transmitted, in turn, to the second microcontroller 8, which then provides, via the relay 9 or the digital-to-analog converter 9a, for the correct triggering, delaying, or modulation of the laser beam, so that welding takes place in a precisely defined location.

The principal phases of the process, which comprise the processing and handling of the individual signals controlling the positioning of the sensor 4, the proper triggering of the laser bursts or delays or the modulation of the laser beam, are described further below. The workpiece 1 consists of a plurality of individual laminations, generally between 0.2 and 0.65 mm thick. There is a thin gap between adjacent laminas, its width being generally between 10 and 20 % of the base thickness of the laminas. The gap is detected by means of the sensor 4, which has to be set up correctly. Most important when doing this is to adjust the detection range, having the function of a first filter, on the sensor 4. The sensor 4 transmits an analog or digital signal to the filer 5, which takes care of filtering out the higher frequencies. The signal thus prepared and supervised using an oscilloscope 6 or a similar device allowing for the signal to be displayed visually, is then sent to the control unit 10. The signal is received by the first microcontroller 7 in the control unit 10. By virtue of special software the microcontroller 7 proceeds to transform the analog signal to digital under certain conditions, defined beforehand and obtained by testing various thicknesses of the individual laminas. The threshold and the sampling rate of the signal, as well as the delay following the last signal change, can be set programmatically. The microcontroller 7 then sends the digital signal to the microcontroller 8 which delays the original signal. The delay is required in order to allow for the correct positioning of the sensor 4 relative to the gap in the workpiece 1, so that the position of the sensor 4 and the position of the gap are aligned, in other words, that the sensor 4 actually detects the correct gap and not one gap before or after the detecting position. The said problem arises because the measurements and the triggering of the laser are not performed coaxially in a same device.

Now, the microcontroller 8, depending on the software loaded thereon, performs an additional task. In a first variation, used in burst laser applications, the microcontroller 8 does not further modify the signal and controls the correct triggering of the laser pulses via the relay 9. The relay 9 is connected to the triggering system on the laser 11 which actually triggers the individual laser pulses. The pulses cause the metal to melt at the point of impact of the pulse, giving rise to spot welding.

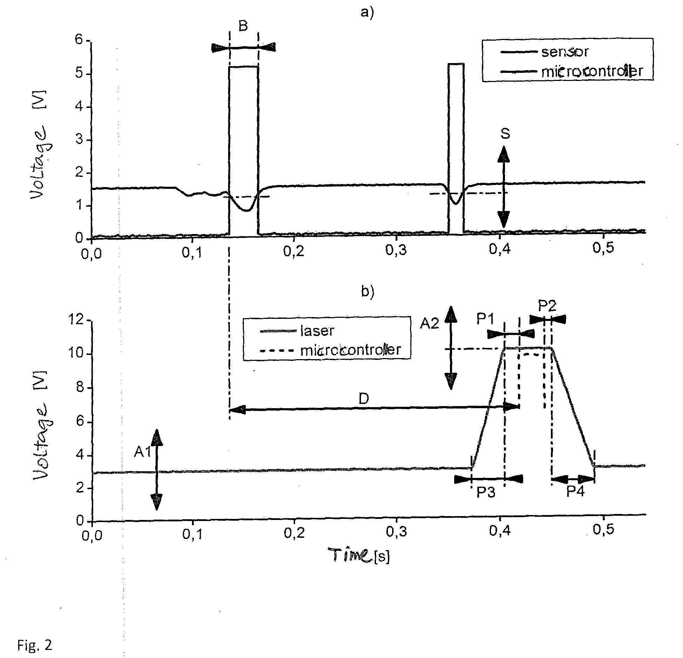

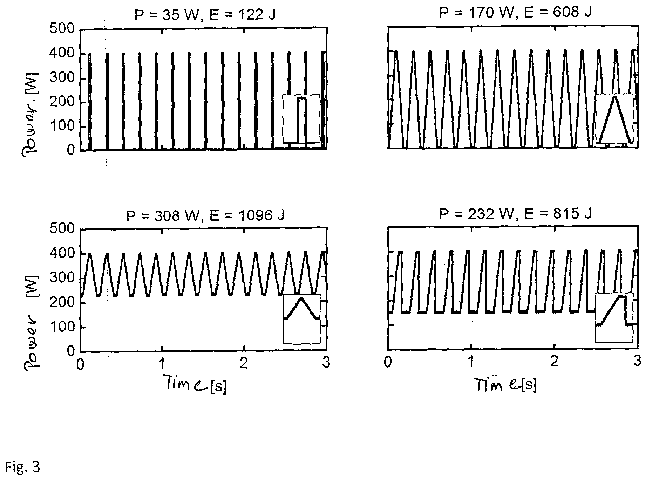

In a second variation, used in continuous laser applications, the microcontroller 8 transforms the digital signal received from the microcontroller 7 into a modulated continuous signal and sends it to the digital-to-analog converter 9a. The signal is modulated with previously defined parameters, which are programmatically set and allow for arbitrary modulation shapes. The adjustable parameters include the following setting: the welding starting point (P1, P2), the welding end point (P2, P4), the delay (D), the lower limit of laser power (A1), and the upper limit of laser power (A2). Figure 2 represents the adjustable parameters, whereas Figure 3 represents some of the possible signal modulation shapes. Subsequently, the digital-to-analog converter 9, similarly to the relay 9, acts upon the continuous laser beam, changing it in accordance with the software settings. To allow for additional supervision of the correct overall operation of the system, the second microcontroller 8 and the relay 9 or the digital-to-analog converter 9a are connected to the oscilloscope 6 or other device capable of visually displaying the signal.

The welding procedure is described concretely for a case of stator package welding. The workpiece 1, a stator package in this case, is fixed to the movable table 2. At this time, the sensor 4 detects only a full surface. A program is launched in the process computer 3, which ensures that the movable table 2 travels with constant speed from one position, starting at the beginning of the fixing device, to the other position, ending at the other end of the stator package 1, namely at the end of the stator package 1. Given that the stator package 1 is being moved, the sensor 4 is attached to the apparatus in such a fashion as to detect the gap several tens of milliseconds in advance of the welding position. That is to say, the sensor 4 travels ahead of the welding laser 11 to allow the signal received from the sensor 4 to be processed in the interim. The moment that the sensor 4 detects the gap between laminations on the stator package, the shape of the output signal from the sensor 4 changes. The signal travels from the sensor 4 through the filter 5 to the microcontroller 7, where it is converted into a digital signal. The digital signal proceeds to the microcontroller 8, where it is conveniently delayed and/or modulated, whereupon the signal passes to the relay 9 or to the digital-to-analog converter 9a which controls the laser. The output signal then triggers individual laser pulses, or it modulates the continuous signal. The entire cycle is repeated about 10,000 times per second, so that welding can proceed without interruptions as the stator workpiece 1 is being moved.

## Claims

1. Method of adaptive laser joining of stator and rotor laminations, wherein laser joining of individual laminations only takes place where two adjacent laminations come into contact, wherein it comprises:
- detecting an individual gap between laminations by means of a sensor (4) in real time;
- based on the signal from the sensor (4), triggering an individual laser pulse, or
- based on the signal from the sensor (4), performing a software-driven modulation of the signal with parameters defined beforehand, and controlling the continuous laser beam by means of the modulated signal;
- wherein the detection of an individual gap by means of the sensor (4) in real time comprises adjusting the detection range of the sensor (4), transmitting the signal from the sensor (4) through a filter (5), said filter (5) being used for removal of the noise from the signal of the sensor (4), to a microcontroller (7) in a control unit (10), which transforms the analog signal to digital under certain conditions, defined beforehand and obtained by testing various thicknesses of the individual laminas, sending the digital signal to a microcontroller (8), which delays the original signal in order to allow for the correct positioning of the sensor (4) relative to the gap in the workpiece (1);
- the triggering of the individual laser pulses and the controlling of the continuous laser beam, respectively, being controlled by means of the microcontroller (8) in the control unit (10).

2. Method according to Claim 1, wherein triggering of individual laser pulses is carried out by means of a relay (9), connected to the triggering system on the laser (11).

3. Method according to any preceding claim, wherein the software-driven modulation of the signal is performed via the microcontroller (8) in the control unit (10), which delays the digital signal received from the microcontroller (7) and transforms it into a modulated continuous signal, sending it to the digital-to-analog converter (9a) which controls the continuous laser beam.

4. Method according to any preceding claim, wherein adjustment of the detection range of the sensor (4) is performed manually prior to use, by modifying the detection range of the sensor (4) using an oscilloscope (6) or a similar device capable of visually displaying the signal and connected to the filter (5), whereby the greater part of the signal is removed, while the variation of the signal in the gap region is enhanced.

5. Apparatus for adaptive laser joining which perform the method according to claims 1 to 4, wherein said apparatus consists of three sections, the first section comprising a sensor (4) which detects the gaps between the individual laminas, the second section consisting of a control unit (10), comprising microcontrollers (7, 8) and the third section comprising a pulse or continuous laser (11) allowing the individual pulses to be controlled and the continuous laser beam to be modulated, respectively, from the outside, by means of the control unit (10), **characterized in that** the first section further comprises an oscilloscope (6) connected to a filter (5) whereby the oscilloscope (6) is used for carrying out a first stage of sensor (4) detection supervision and the filter (5) is used for removal of the noise from the signal of the sensor (4); the second section further comprises a relay (9) or a digital-to-analog converter (9a) whereby the first microcontroller (7) transforms the analog signal to digital signal and sends the digital signal to the second microcontroller (8) which delays the original signal and controls the correct triggering of the laser pulses via the relay (9) or transforms the digital signal into a modulated continuous signal and sends it to the digital-to-analog converter (9a) which acts upon the continuous laser beam and whereby the second microcontroller (8) and the relay (9) or the digital-to-analog converter (9a) are connected to the oscilloscope (6).

## Patentansprüche

1. Verfahren zur adaptiven Laserverbindung von Stator- und Rotorblechen, wobei die Laserverbindung der einzelnenBleche nur dort erfolgt, wo zwei benachbarte Bleche in Kontakt kommen, umfassend:
- Erfassen von einzelnen Spalten zwischen den Blechen mittels eines Sensors (4) in Echtzeit;
- Auslösungeines einzelnen Laserpulses aufgrund eines Signals vom Sensor (4), oder
- aufgrund eines Signals vom Sensor (4), Durchführungeiner softwaregesteuerten Modulation des Signals mit zuvor definierten Parameternund Steuerung des kontinuierlichen Laserstrahls mittels des modulierten Signals;
- wobei die Erfassung der einzelnen Spalten mittels des Sensors (4) in Echtzeit umfasst:Einstellungdes Erfassungsbereichs des Sensors (4), Senden des Signals vom Sensor (4) durch einen Filter (5), wobei der Filter (5) zur Entfernung des Rauschens aus dem Signal des Sensors (4) an einen Mikrokontroller (7) in einer Steuereinheit (10) dient, die das analoge Signal unter bestimmten Bedingungen, die zuvor definiert und durch Testen verschiedener Dicken der einzelnen Lamellengewonnenwerden, in digitale Wertetransformiert, Senden des digitalen Signals an einen Mikrokontroller (8), der das ursprüngliche Signal verzögert, um die korrekte Positionierung des Sensors (4) im Verhältniszum Spalt im Werkstück (1) zu ermöglichen;
- wobei das Auslösen der einzelnen Laserpulse bzw.dasAuslösen des kontinuierlichen Laserstrahls mittels des Mikrokontrollers (8) in der Steuereinheit (10) gesteuert wird.

2. Verfahren nach Anspruch 1, wobei das Auslösen einzelner Laserpulse mittels eines Relais erfolgt (9), dasmit dem Ansteuersystem auf dem Laser (11) verbunden ist.

3. Verfahren nach einem der vorhergehenden Ansprüche, wobei die softwaregesteuerte Modulation des Signals über den Mikrokontroller (8) in der Steuereinheit (10) erfolgt, die das von dem Mikrokontroller (7) empfangene digitale Signal verzögert und diesesin ein moduliertes kontinuierliches Signal umwandelt, Senden desselben an den Digital-Analog-Wandler (9A), der den kontinuierlichen Laserstrahl steuert.

4. Verfahren nach einem der vorhergehenden Ansprüche, wobei die Einstellung des Erfassungsbereichs des Sensors (4) manuell vor der Verwendungerfolgt durchVeränderung des Erfassungsbereichs des Sensors (4) mithilfeeinesOszilloskops (6) oder einesähnlichenGerätes, dasdas Signal visuell darstellen kannund dasmit dem Filter (5) verbunden ist (5), wodurch ein Großteil des Signals entfernt wird, während die Signalvariation im Spaltbereich erhöht wird.

5. Vorrichtung zur adaptiven Laserverbindung, die das Verfahren nach den Ansprüchen 1 bis 4 durchführt, wobei die Vorrichtung aus drei Abschnitten besteht, aus dem ersten Abschnitt, der einen Sensor (4) aufweist, der die Spalte zwischen den einzelnen Lamellen erfasst, dem zweiten Abschnitt, bestehend aus einer Steuereinheit (10), die die Mikrokontroller (7, 8) umfasst, sowie dem dritten Abschnitt, der einen Puls-oder kontinuierlichen Laser (11) aufweist, der es ermöglicht, die einzelnen Pulse zu steuern bzw. den kontinuierlichen Laserstrahl, jeweils von außen mittels der Steuereinheit (10)zu modulieren,**dadurch gekennzeichnet, dass** der erste Abschnitt weiterhinein, mit einem Filter (5) verbundenes Oszilloskop (6) umfasst,wobei das Oszilloskop (6) zur Durchführung einer ersten Stufe der Erfassung des Sensors (4) verwendet wird und der Filter (5) zur Entfernung des Rauschens aus dem Signal des Sensors (4) verwendet wird; der zweite Abschnitt außerdemein Relais (9) oder einen Digital-Analog-Wandler (9a) umfasst, wobei der erste Mikrokontroller (7) das analoge Signal in ein digitales Signal umwandelt und das digitale Signal an den zweiten Mikrokontroller (8) sendet, der das ursprüngliche Signal verzögert und über das Relais (9) die korrekte Auslösung der Laserpulse steuert oder das digitale Signal in ein moduliertes kontinuierliches Signal umwandelt und es an den Digital-Analog-Wandler(9A) sendet, der den kontinuierlichen Laserstrahl bewirkt, und wobei der zweite Mikrokontroller (8) und das Relais (9) oder der Digital-Analog-Wandler (9a) mit dem Oszilloskop (6) verbunden sind.

## Revendications

1. Procédé d'assemblage par laser adaptatif de tôles stator et rotor, l'assemblage laser de tôles individuelles n'ayant lieu que lorsque deux tôles adjacentes entrenten contact, le procédé comprenant :
- la détection d'un écartement individuel entre des tôles au moyen d'un capteur (4) en temps réel ;
- sur la base du signal provenant du capteur (4), le déclenchement d'une impulsion laser individuelle, ou
- sur la base du signal provenant du capteur (4), la réalisation d'une modulation du signal pilotée par logiciel avec des paramètres préalablement définis, et la commande du faisceau laser continu au moyen du signal modulé ;
- la détection d'un écartement individuel au moyen du capteur (4) en temps réel comprenant l'ajustement de la plage de détection du capteur (4), la transmission du signal à partir du capteur (4) à travers un filtre (5), ledit filtre (5) étant utilisé pour éliminer le bruit du signal du capteur (4) à un microcontrôleur (7) dans une unité de commande (10), qui transforme le signal analogique en numérique dans certaines conditions préalablement définies et obtenues en testant diverses épaisseurs des différentes feuilles, la transmission du signal numérique à un microcontrôleur (8), qui retarde le signal d'origine afin de permettre le positionnement correct du capteur (4) par rapport à l'écartement dans la pièce à travailler (1) ;
- le déclenchement des impulsions laser individuelles et la commande du faisceau laser continu, respectivement, étant commandés au moyen du microcontrôleur (8) dans l'unité de commande (10).

2. Procédé selon la revendication 1, dans lequel le déclenchement d'impulsions laser individuelles est réalisé au moyen d'un relais (9) connecté au système de déclenchement sur le laser (11).

3. Procédé selon l'une quelconque des revendications précédentes, la modulation pilotée par logiciel du signal étant effectuée par l'intermédiaire du microcontrôleur (8) dans l'unité de commande (10), qui retarde le signal numérique reçu en provenance du microcontrôleur (7) et le transforme en un signal continu modulé, le transmettant au convertisseur numérique-analogique (9A) qui commande le faisceau laser continu.

4. Procédé selon l'une quelconque des revendications précédentes, le réglage de la plage de détection du capteur (4) étant réalisé manuellement avant l'utilisation, par la modification de la plage de détection du capteur (4) à l'aide d'un oscilloscope (6) ou d'un dispositif similaire capable d'afficher visuellement le signal et connecté au filtre (5), moyennant quoi la plus grande partie du signal est éliminée, tandis que la variation du signal dans la région d'écartementest amplifiée.

5. Un appareil pour l'assemblage par laser adaptatif qui met en oeuvre le procédé selon les revendications 1 à 4, ledit appareil étant constitué de trois sections, la première section comprend un capteur (4) qui détecte les écartementsentre les différentes feuilles, la seconde section est constituéed'une unité de commande (10) comprenant des microcontrôleurs (7, 8), et la troisième section comprend un laser par impulsions ou continu (11) permettant de commander les impulsions individuelles et de moduler le faisceau laser continu, respectivement, depuis l'extérieur, au moyen de l'unité de commande (10), **caractérisé en ce que** la première section comprend en outre un oscilloscope (6) connecté à un filtre (5), l'oscilloscope (6) étant utilisé pour réaliser lapremièreétapede détection par le capteur (4) et le filtre (5) étant utilisé pour éliminer le bruit du signal du capteur (4) ; la seconde section comprend en outre un relais (9) ou un convertisseur numérique-analogique (9a) dans lequel le premier microcontrôleur (7) transforme le signal analogique en signal numérique et transmet le signal numérique au second microcontrôleur (8) qui retarde le signal d'origine et commande le déclenchement correct des impulsions laser par l'intermédiaire du relais (9) ou transforme le signal numérique en un signal continu modulé et le transmet au convertisseur numérique-analogique (9a), qui agit sur le faisceau laser continu et dans lequel le second microcontrôleur (8) et le relais (9) ou le convertisseur numérique-analogique (9a) sont connectés à l'oscilloscope (6).
